Europäisches Patentamt

European Patent Office

Office européen des brevets

(11) Publication number: **0 481 453 A1**

(12) **EUROPEAN PATENT APPLICATION**

(21) Application number: **91117652.7**

(22) Date of filing: **16.10.91**

(51) Int. Cl.⁵: **B62B 9/12**

(30) Priority: **16.10.90 JP 276882/90**

(43) Date of publication of application:
**22.04.92 Bulletin 92/17**

(84) Designated Contracting States:
**AT BE CH DE DK ES FR GB GR IT LI LU NL SE**

(71) Applicant: **COMBI CORPORATION**
**No. 16-9, Uchikanda 3-chome**
**Chiyoda-ku, Tokyo(JP)**

(72) Inventor: **Kato, Hitoshi**
**c/o Combi Corporation, 16-9, Uchikanda**
**3-chome**
**Chiyoda-ku, Tokyo(JP)**
Inventor: **Arai, Yuichi**
**c/o Combi Corporation, 16-9, Uchikanda**
**3-chome**
**Chiyoda-ku, Tokyo(JP)**

(74) Representative: **Füchsle, Klaus, Dipl.-Ing. et al**
**Hoffmann . Eitle & Partner Patentanwälte**
**Arabellastrasse 4**
**W-8000 München 81(DE)**

(54) **Seat construction for a stroller.**

(57) The invention relates to a seat (C) for a stroller, or the like, having a reclining backrest (6). The seat (C) is releasably attachable to a stroller body (B). When not attached to the stroller body (B), the seat (C) may be utilized as a carrier by virtue of an integral carrying strap. Either a leg guard or a leg cover may be attached to the seat (C).

FIG. 3

## BACKGROUND OF THE INVENTION

Field of the Invention:

The present invention relates to a seat construction for a stroller, or the like.

Description of the Related Art:

In conventional strollers, a seat and a backrest are formed by a single sheet of cloth, and are classified into types in which the backrest can be reclined and those in which the backrest cannot be reclined.

Strollers with non-reclining backrests are adapted mainly for use by relatively older and larger babies, whereas strollers with the reclining backrests are adapted for use by babies over a wide range of ages. In addition, some strollers have a protective frame detachably mounted on the front side of the seat so as to prevent the baby from falling from the seat.

Finally, some strollers with reclining backrests have a seat which can be freely attached to, and detached from, the stroller body.

In the above-described conventional strollers, however, the protective frame and the seat are constructed so as to meet with the use by babies of all ages and sizes, and therefore the habitability of the seat, as well as the portability of the seat, are not proper for babies of all ages.

## SUMMARY OF THE INVENTION

The present invention seeks to deal with the above problems. Accordingly, it is an object of the invention to provide a seat construction for a stroller, or the like, having a seat that can be easily detached from a body, and the baby can be carried using the seat as a baby carrier.

Another object of the invention is to provide a seat construction for a stroller or the like, in which a protective frame for preventing the baby from falling and a frame for suspending a cover for protecting the legs of the baby can be selectively attached to the front side of the seat.

A further object of the invention is to provide a seat construction for a stroller or the like in which a seat can be freely reclined or folded irrespective of whether the body is connected to the seat or separated therefrom.

The present invention is a seat construction for a stroller, or the like. The seat has a seat portion, a backrest provided at a rear end of a seat portion, and armrests upstanding respectively from opposite sides of said seat portion. A guard frame or a suspension pipe can be selectively attached to front ends of the armrests for protection of the baby. A cover sheet can be attached to the suspension pipe and seat portion.

## BRIEF DESCRIPTION OF THE DRAWINGS

FIGURE 1 is a perspective view of the preferred embodiment with a guard frame attached to a seat;

FIGURE 2 is a side-elevational view of the preferred embodiment, with a suspension pipe attached to the seat;

FIGURE 3 is a perspective view of the seat and body in the condition shown in FIGURE 1, showing them as being separate from each other;

FIGURE 4 is a perspective view showing an example in which the guard frame is attached to the front side of the seat, a seat cushion as well as the guard frame being shown as being separate from the seat portion;

FIGURE 5 is a perspective view showing an example in which a mounting pipe for a cover sheet is attached to the front side of the seat, the seat and baby-carrying cart being separate from each other;

FIGURE 6 is a perspective view of the seat used as a baby carrier;

FIGURE 7 is a perspective view showing the condition of retaining of a carrier belt in FIGURE 6, part of the seat cushion being broken;

FIGURE 8 is a fragmentary, enlarged perspective view showing the retaining portion of the carrier belt in FIGURE 7;

FIGURE 9 is an exploded perspective view of FIGURE 6;

FIGURE 10 is a cross-sectional view showing the process of inserting a retaining pipe into a fitting hole portion; and

FIGURE 11 a fragmentary, enlarged perspective view showing the condition of retaining of the carrier belt on the lower surface of the seat portion.

## DETAILED DESCRIPTION OF THE PREFERRED EMBODIMENTS

A preferred embodiment of the present invention will now be described with reference to the attached drawings.

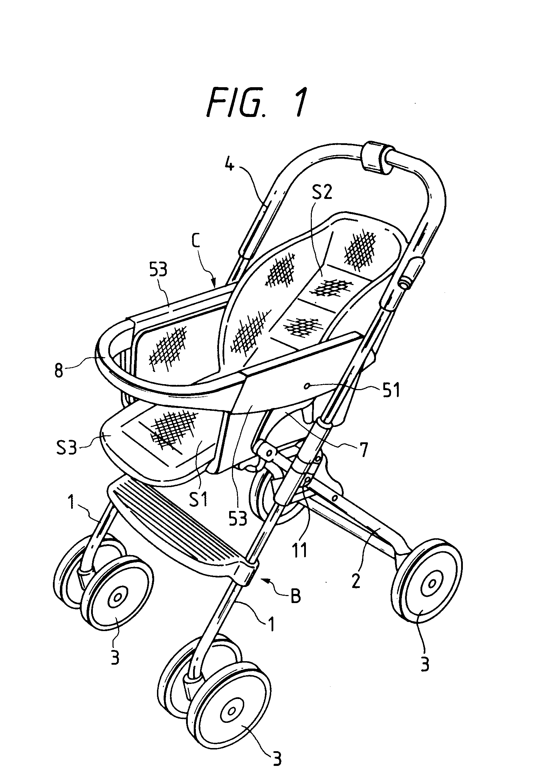

FIGURES 1, 2, and 3 illustrate the preferred embodiment.

A stroller according to the preferred embodiment is formed by a combination of foldable body B and seat C (which can also serve as a baby carrier) releasably attached to body B.

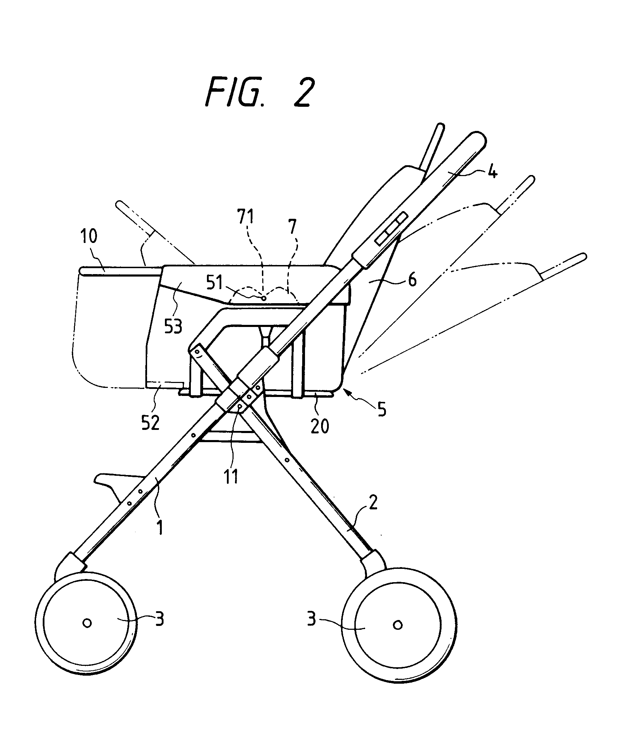

Body B has front leg pipes 1 having wheels 3 at their lower ends, rear leg pipes 2 having wheels 3 at their lower ends having respective upper end portions to which upper end portions of front leg pipes 1 are pivotally connected, at pivot 11, so as to enable the folding of front leg pipes 1 and rear leg pipes 2. Handle 4 has lower ends which are connected respectively to upper ends of front leg pipes 1 so as to extend along the axes of front leg pipes 1 to thereby provide an appearance in which the handle is continuous with the front leg pipes 1 where body B is in an unfolded position. With this construction, the body structure assumes a generally X-shape when viewed from the side (see FIGURE 2).

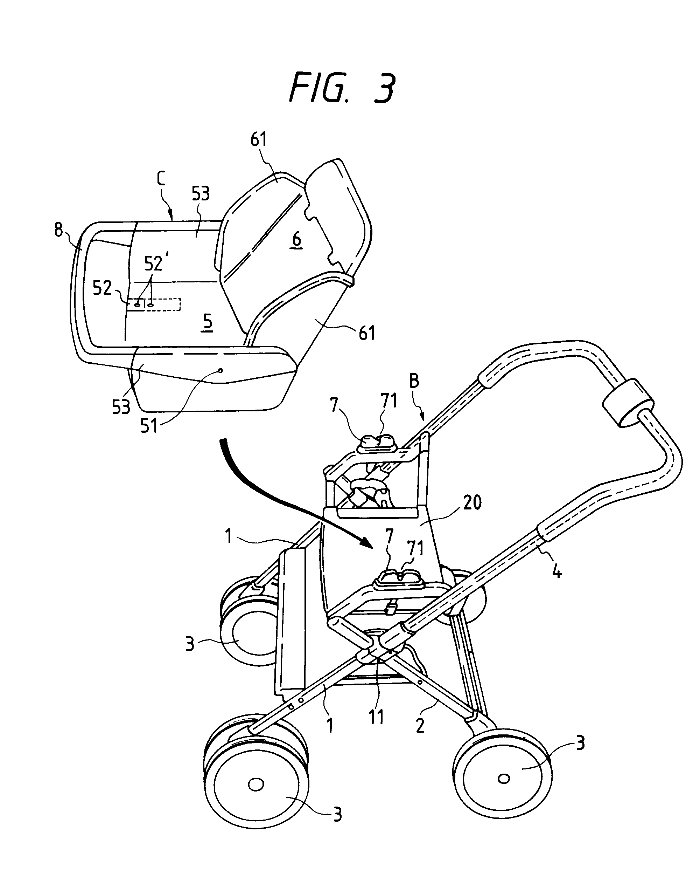

Seat C also serves as a baby carrier when detached from body B. Seat C has seat portion 5, and backrest 6 pivotally connected to seat portion 5 so as to be capable of pivoting between a raised position and a reclined position. Retaining pins 51, formed respectively on the opposite sides of seat portion 5, are engaged respectively in engagement grooves 71 formed in retaining members 7 each extending between upper end portions of rear leg pipe 3 and the lower end portions of handle 4. The lower surface of seat portion 5 is supported by support plate 20 provided on body B (see FIGURES 2 and 3).

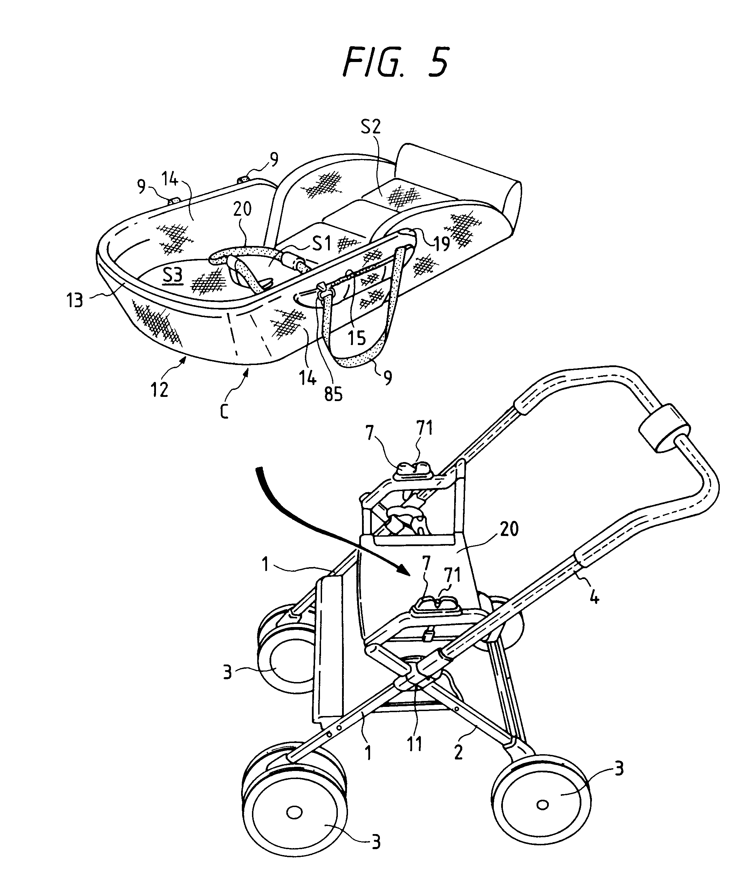

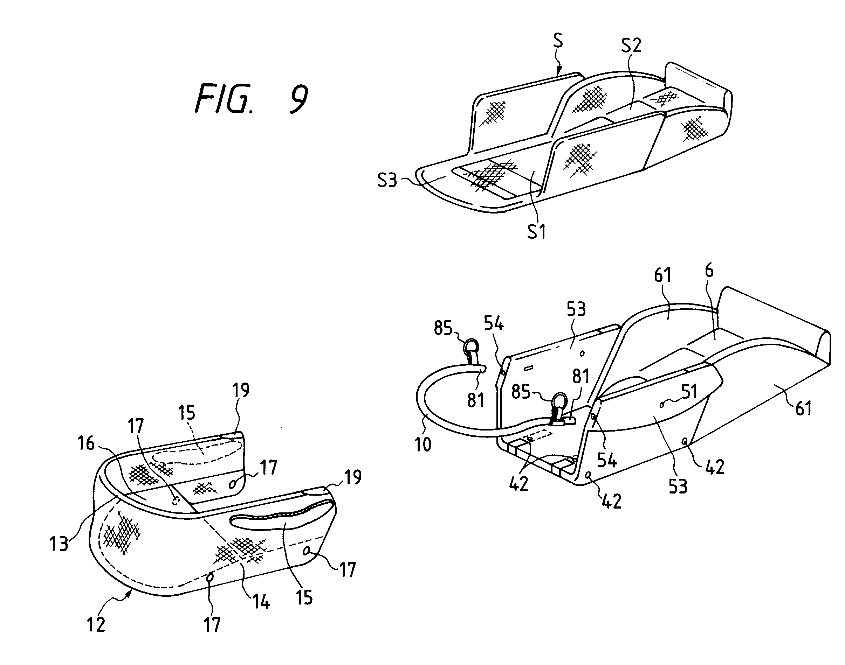

Support bars 52 for supporting a lower surface of a distal end portion of seat cushion S are mounted on the front end of seat portion 5 so as to be extendable therefrom. Retaining member 52' for engagement with the lower surface of seat cushion S extends from the front end portion of support bar 52 (see FIGURES 5 and 9).

Any well known design of a stopper mechanism can be utilized for holding support bars 52 in a retracted condition (in which the support bar is accommodated within the seat surface of seat portion 5) or in an extended condition (in which the support bar is extended from the front end of seat portion 5).

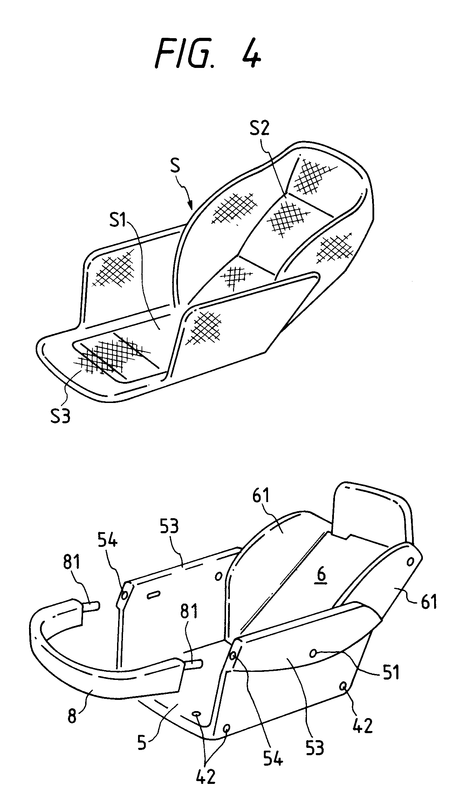

Seat cushion S of the preferred embodiment is formed by a cotton material which is subjected to quilting or other treatment to impart a suitable elasticity to the interior thereof. However, a wide variety of materials may be utilized. As shown in FIGURE 4, seat cushion S has bottom pad S1 of such a size as to cover the seat surface of seat portion 5 and the inner surfaces of armrests 53, and back pad S2 of such a size so as to cover backrest 6 and side plate 61 projecting respectively from the opposite sides of backrest G. Front pad S3, for supporting the baby's calves, extends from the front end of bottom pad S1 (see FIGURES 4 and 9).

Guard frame 8, for preventing the baby from falling from seat portion 5, has its opposite ends detachably fitted respectively in armrests 53.

Guard frame 8 is generally U-shaped as viewed from above, and has retaining pipes 81 of a suitable length at its opposite ends. When using guard frame 8, retaining pipes 81 are releasably fitted respectively into fitting hole portions 54 formed in the front faces of the upper end portions of armrests 53.

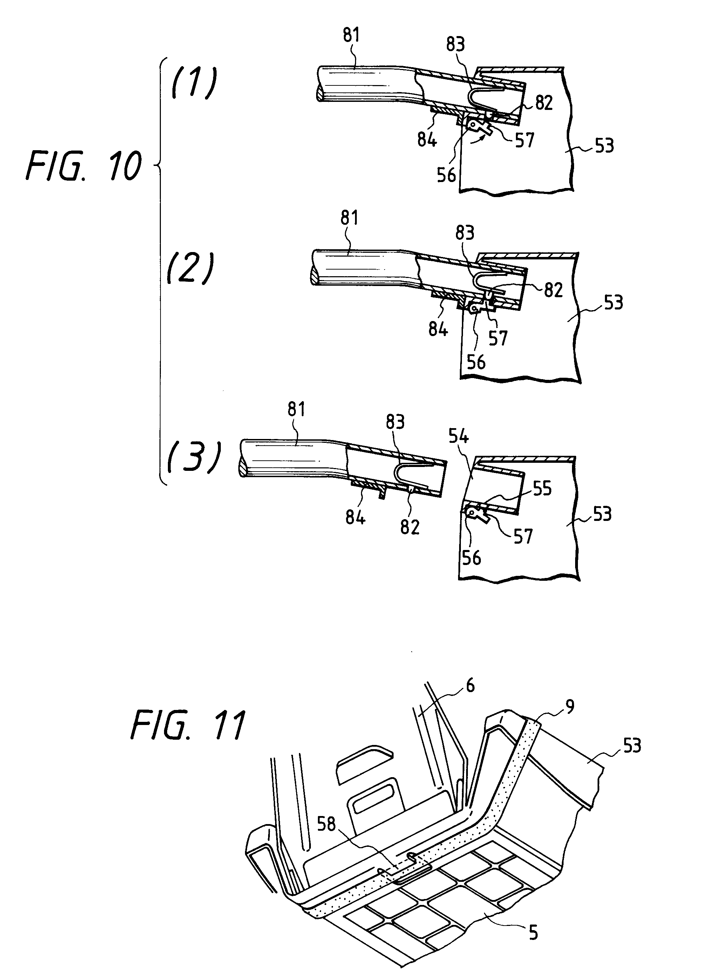

Retaining projection 82 is retractably provided on the distal end portion of retaining pipe 81, and is fitted in retaining hole 55, formed in fitting hole portion 54, so as to prevent retaining pipe 81 from disengaging from armrest 53 (see FIGURE 10).

Spring plate 83 is mounted within retaining pipe 81 so as to resiliently support the back surface of retaining projection 82 provided on retaining pipe 81. Spring plate 83 is bent into a U-shape and abutted against the back surface of retaining projection 82 so as to bias retaining projection 82 to be normally projected from the surface of retaining pipe 82.

Release member 56 serves to disengage retaining projection 82 from retaining hole 55. Release member 56 is pivotally mounted below retaining hole 55, and has, at its distal end, projection 57.

Stopper 84 is mounted on retaining pipe 81 adjacent to the distal end thereof so as to prevent retaining pipe 81 from being inserted too far into fitting hole portion 54.

The mounting portion for stopper 84 can also be used as a mounting portion for retaining metal ring 85 of carrier belt 9, which is described below.

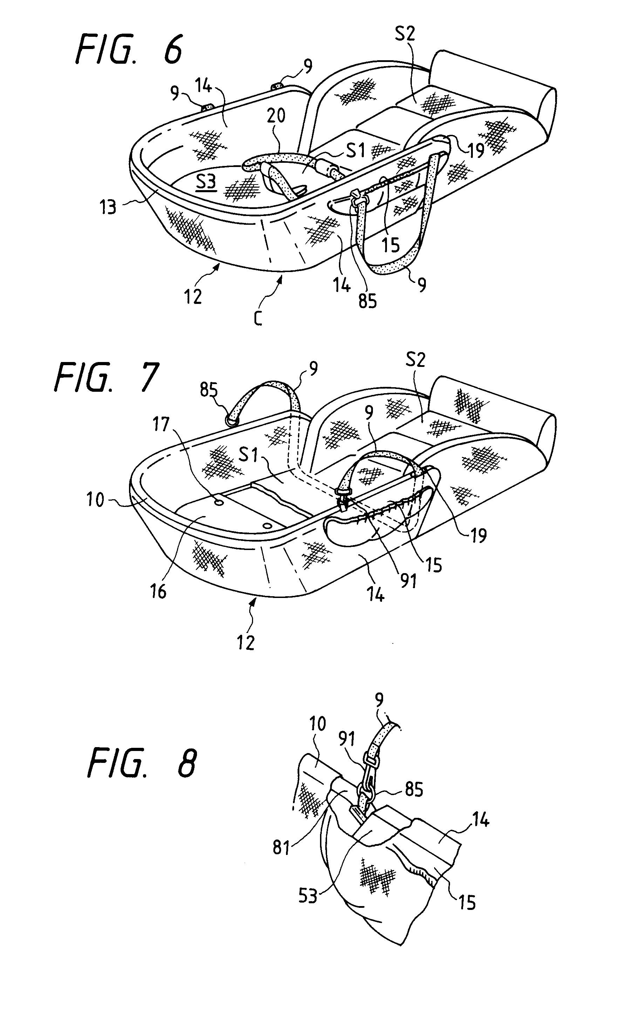

Carrier belt 9 is utilized when seat C is used as a baby carrier. Carrier belt 9 is engaged at its central portion in retaining groove 58 formed in the lower surface of seat portion 5. Retaining members 91, secured respectively to opposite ends of carrier belt 9, are releasably attached respectively to retaining rings 85 attached to retaining pipes 81 (see FIGURES 7, 8, and 11).

In the embodiment shown in FIGURE 7, after the central portion of carrier belt 9 is extended across, and engaged with, the lower surface of the rear end of seat portion 5, its opposite ends are extended upward along the outer sides of armrests 53. Then, each of the end portions thereof is bent into a U-shape, and is engaged with a proximal end portion of suspension pipe 10. The method of retaining carrier belt 9 is not limited to the above-mentioned method, and for example, two carrier belts 9 of a suitable length may be retained respectively on the opposite sides of seat portion 5 independently of each other.

Suspension pipe 10 is provided for mounting cover sheet 12 and has a U-shape as viewed from above. At opposite ends of suspension pipe 10 are retaining pipes 81. If suspension pipe 10 is designed to have the same size as that of retaining pipe 81, opposite end portions of a suitable length of a single pipe bent into a U-shape, and utilized as suspension pipe 10, are used as retaining pipes 81.

Cover sheet 12 is made of a cotton cloth similar to that of seat cushion S. The cotton cloth of a suitable width is folded so as to provide a band-like member of a U-shaped cross-section having a lower opening. The central portion of this band-like member serves as fitting portion 13 for receiving suspension pipe 10, and its opposite end portions, continuous with this central portion, serve as covering portions 14 for respectively covering armrests 53 (see FIGURES 6, 7, and 9).

Belt-receiving pocket 15 is formed on each covering portion 14. When carrier belt 9 is not used, it is folded and received in belt receiving pocket 15.

Footrest 16, of a semi-circular shape, is attached to cover sheet 12 so as to close the lower side of cover sheet 12. Footrest 16 covers the lower side from the front end of seat portion 5 to a position beneath suspension pipe 10. Retaining elements 17 are engageable respectively with retaining elements 42 provided on the side portions and front end portions of seat portion 5 so as to secure cover sheet 12 to seat S.

Holes 19, through which retaining rings 85 pass, are formed in pockets 15 formed on cover sheet 12.

Safety belt 20 is used to secure safety of the baby seated on seat portion 5 (see FIGURE 6).

FIGURES 1 and 3 illustrate use of the preferred embodiment when guard frame 8 is attached to seat portion 5.

When a relatively old baby is seated on seat portion 5, backrest 6 is upstanding at a suitable angle, and the legs of the baby extend downward from the front end of seat portion 5. When a younger baby is on seat portion 5, backrest 6 is inclined at a suitable angle, or completely laid flat, and the legs of the baby do not extend downward from the front end of seat portion 5 but are supported.

To accommodate the above-mentioned situations, the following two modes of use can be adopted.

Mode of use in which the backrest is kept upstanding:

(1) Seat cushion S is attached to seat portion 5 and backrest 6,

(2) Backrest 6 is upstanding at a suitable angle, and guard frame 8 is attached to armrests 53.

(3) For attachment of guard frame 8, retaining pipes 81, provided at the opposite ends of guard frame 8, are fitted in and retained to fitting hole portions 54 formed in the front end portions of armrests 53.

(4) Support bars 52, extensibly mounted on the front end of seat portion 5, are kept accommodated within the seat surface.

(5) Front pad S3, continuous with the front end of bottom pad S1, is hung from the front end of seat portion 5 so as to protect the rear surfaces of the baby's calves hanging from the front end of seat portion 5.

Mode of use in which the backrest is kept inclined:

(1) Seat cushion S is attached to seat portion 5 and backrest 6.

(2) Backrest 6, is either inclined at a suitable angle for reclining purposes, or is brought into a generally horizontal, fully reclining position. Guard frame 8 is attached to the front ends of armrests 53.

(3) For attachment of guard frame 8, retaining pipes 81, provided at the opposite ends of guard frame 8, a refitted and retained in fitting hole portions 54 formed in the front end portions of armrests 53.

(4) The support bars 52, extensibly mounted on the front end of the seat surface of seat portion 5, are expanded forwardly therefrom, and front pad S3 is placed on support bars 52 so as to support the legs of the baby in an extended position.

FIGURES 5-9 illustrate the use of suspension pipe 10 for very young babies.

The above mode of use includes two examples, one in which seat C is retained on stroller body B so that the stroller can be used in a conventional manner, or as a baby bed, and one in which seat C is removed from body B and is used as a baby carrier.

The case where seat C is retained on body B:

(1) Backrest 6, is either inclined at a suitable angle for reclining purposes, or is brought into a generally horizontal position for full reclining purposes to thereby provide a bed-like condition.

(2) Retaining pipes 81, provided at the opposite ends of suspension pipe 10, are fitted in fitting hole portions 54 formed in the front end portions of armrests 53.

In this case, it is necessary that retaining pipe 81 should be inserted until retaining projection 82 formed at its distal end becomes engaged in retaining hole 55.

(3) Fitting portion 13 of cover sheet 12 is engaged with suspension pipe 10 from above, and retaining elements 17, provided on covering portions 14, are retained on the side surfaces of armrests 53 through retaining elements 42. Retaining elements 17, on footrest 16, are retained on the front end portion of seat portion 5 through retaining elements 42.

(4) The central portion of carrier belt 9 is engaged in retaining groove 58 and the opposite end portions of this belt, exposed at those regions from the lower end of seat portion 5 along the side surfaces of armrests 53, are pulled out from holes 19 and are folded and received in pockets 15.

(5) Seat cushion S is attached to seat portion 5 and backrest 6, and front pad S3 is placed on footrest 16 provided at the lower side of cover sheet 12.

(6) After the above operations (1)-(5) are finished, retaining pins 51 provided at the opposite sides of seat portion 5 are respectively fitted in and retained to the engagement grooves 71 in retaining members 7 mounted on body B.

The case where seat C is used as a baby carrier:

(1) When seat C is removed from body B, those portions of carrier belt 9 received in pockets 15 of cover sheet 12 are taken out therefrom, and retaining members 91, secured to the ends of carrier belt 9, are retained on retaining rings 85, secured to retaining pipes 81. Then carrier belt 9 is adjusted to a length suited for carrying purposes.

(2) Retaining pins 51 provided on the opposite sides of seat portion 5 are disengaged from engagement grooves 71 in retaining members 7.

(3) By gripping a suitable portion of carrier belt 9, seat C can be used as the baby carrier.

The advantageous effects of the present invention are as follows:

(1) Stroller body B and seat C are formed of separate structures, and therefore, they can be integrally connected together and separated from each other according to need. Accordingly, this construction can be used as a stroller and bed or seat C can be removed from body B and used as a baby carrier.

(2) Guard frame 8 or suspension pipe 10, for cover sheet 12, can be selectively attached to armrests 53. Therefore, in the case of younger babies, suspension pipe 10 is attached, and cover sheet 12 is attached thereto, so that the baby can be safely laid on seat C in bed-like condition.

In the case of a relatively older baby, instead of suspension pipe 10, guard frame 8 is attached; cover sheet 12 is not utilized. Therefore, the baby can be protected.

(3) Carrier belt 9 can be retained on seat C. Therefore, if seat C is removed from body B, it can then be carried by means of carrier belt 9. Therefore, the invention can be used as a stroller before arrival at a destination, and then can be used a baby carrier after arrival. It can also be used as a baby bed indoors or in a car, thus providing a multi-purpose construction.

## Claims

1. A seat for a stroller, comprising:
   a seat portion;
   a backrest pivotally connected to a rear portion of said seat portion;
   armrests upstanding respectively from opposite sides of said seat portion;
   one of a guard frame and a suspension pipe supporting a cover sheet selectively releasably attached to said suspension pipe and said seat portion.

2. A seat for a stroller according to claim 1, wherein said cover sheet includes a covering portion 14 bent into a U-shape as viewed from above, and a footrest closing a lower side of said covering portion, said covering portion being adapted to be attached to said suspension pipe.

3. A seat for a stroller according to claim 2, wherein said cover sheet 12 is formed by folding cloth sheet of a desired width so as to provide a band-like member of a U-shaped cross-section having a lower opening, a central portion of said band-like member serving as a fitting portion for receiving said suspension pipe, opposite end portions of said band-like member, continuous with said central portion, serving as covering portions for respectively covering said armrests, said footrest being attached to said cover sheet so as to cover said lower opening.

4. A seat for a stroller according to claim 2, further comprising:
   a seat cushion attached to said seat portion and said backrest.

5. A seat for a stroller according to claim 4, wherein said seat cushion is formed of a quilted cotton material, said seat cushion having a bottom pad, of such a size as to cover a seat surface of said seat portion and inner surfaces of said armrests, and a back pad of such a size as to cover said backrest and side plates upstanding respectively from opposite sides of said backrest, and a front pad, for supporting the calves of a baby seated in the seat, extending from a front end of said bottom pad.

6. A seat for a stroller according to claim 2, further comprising:
   a carrier belt attached to a lower surface of said seat portion;
   opposite ends of said carrier belt being releasably retained respectively on mounting portions of said suspension pipe.

**7.** A seat for a stroller according to claim 2, further comprising:

retaining pipes, provided respectively at opposite ends of said suspension pipe releasably fitted respectively in fitting hole portions formed respectively at a front end portion of said armrests

a retaining projection retractably mounted on the distal end of said retaining pipe engageable in a retaining hole formed in said fitting hole portion.

**8.** A seat for a stroller according to claim 2, wherein said backrest can be freely inclined so as to be coplanar with said seat portion.

**9.** A seat for a stroller according to claim 8, wherein said seat is releasably attached to a stroller body.

**10.** A seat for a stroller according to claim 9, further comprising:

retaining pins formed respectively on opposite side surfaces of said seat portion, said retaining pins being adapted to be releasably engaged respectively in engagement grooves formed in a stroller upon which the seat is to be mounted.

# FIG. 1

FIG. 2

# FIG. 3

# FIG. 4

# FIG. 5

FIG. 6

FIG. 7

FIG. 8

FIG. 9

EP 0 481 453 A1

FIG. 10

(1)

81   83

84   57   82

56   53

(2)

81   83

84   82

57   53

56

(3)

81   83   54

84   82   55

57   53

56

FIG. 11

6   9   53

58

5

European
Patent Office

**EUROPEAN SEARCH REPORT**

Application Number

**EP 91 11 7652**

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 161 703 (KASSAI K.K.) <br> * page 2, line 86 - line 91; figures 1-5,6 * * | 1,2,8 | B 62 B 9/12 |
| A | | 3-5,7 | |
| | _ _ _ | | |
| A | US-A-3 330 575 (A.BOUDREAU) <br> * the whole document * * | 1-5,8 | |
| | _ _ _ | | |
| A | EP-A-0 303 749 (J.MOCKA) <br> * column 4, line 30 - line 54; figure 6 * * | 6 | |
| | _ _ _ | | |
| A | FR-A-2 379 417 (A.HOFMANN METALLWARENFABRIK) <br> * the whole document * * | 9,10 | |
| | _ _ _ _ _ | | |

|  |
|---|
| TECHNICAL FIELDS SEARCHED (Int. Cl.5) |
| B 62 B |

The present search report has been drawn up for all claims

| Place of search | Date of completion of search | Examiner |
|---|---|---|
| The Hague | 21 January 92 | CZAJKOWSKI A.R. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

                              

& : member of the same patent family, corresponding
document